# EUROPÄISCHE PATENTSCHRIFT

(11) **EP 2 705 783 B1**
(45) Veröffentlichungstag und Bekanntmachung des Hinweises auf die Patenterteilung: **30.07.2014**
(21) Anmeldenummer: 12401182.6
(22) Anmeldetag: 06.09.2012
(51) Int. Cl.: A47J 31/60

(54) **Vorratsbehälter einer Entkalkungsvorrichtung, Getränkeautomat und Verfahren zur Entkalkung eines Getränkeautomaten**
Reservoir of a descaling device, beverage machine and method for descaling a beverage machine
Réservoir d'un dispositif de détartrage, automate à boissons et procédé de détartrage d'un automate à boissons

(43) Veröffentlichungstag der Anmeldung: 12.03.2014
(73) Patentinhaber: Miele & Cie. KG, 33332 Gütersloh (DE); BWT AG, 5310 Mondsee (AT)
(72) Erfinder: Johann, Jürgen, Dr., 5310 Mondesee (AT); Last, Mario, 33739 Bielefeld (DE); Tembaak, Jutta, 49492 Westerkappeln (DE)

(56) Entgegenhaltungen:
- EP-B1- 2 265 158

## Beschreibung

Die Ablagerungen von Calziumcarbonat oder Magnesiumkarbonat stellen in Wasser führenden Strömungsleitungssystemen und technischen Geräten ein besonderes Problem dar, da sie über einen längeren Zeitraum betrachtet deren Funktionsweise erheblich beeinträchtigen können. Calziumcarbonat und Magnesiumkarbonat werden gemeinhin auch als "Kalk" bezeichnet. Es sind bereits verschiedene Entkalkungsmittel bekannt und im Einsatz, die auf Grund einer chemischen Reaktion in der Lage sind, den "Kalk" in Strömungsleitungssystemen und technischen Geräten zu lösen. Allerdings müssen sie in regelmäßigen Abständen wiederholt zum Einsatz kommen, da sich ansonsten die Ablagerungen so weiter entwickeln können, dass die Strömungsleitungssysteme beziehungsweise die technischen Geräte unbrauchbar werden. In einem solchen Fall sind in der Regel aufwändige und kostenintensive Reparaturen erforderlich.

Aus der EP 2 265 158 B1 geht am Beispiel eines Getränkeautomaten ein Vorratsbehälter zur Aufnahme eines wasserlöslichen Entkalkungsmittels hervor, der ein Gehäuse aufweist und von einer Wasserquelle mit Wasser gespeist wird. Ein separater Gemischauslass des Vorratsbehälters sorgt dabei dafür, dass das gelöste Entkalkungsmittel in das Strömungsleitungssystem abgeführt wird und dort seine gewünschte Wirkung erzielt. Hierbei wird das Prinzip der Durchlaufströmung genutzt. Dies bedeutet, das Wasser durchläuft vom Wasserzufluss zum Gemischauslass die vom Nutzer einmalig eingebrachte Dosis Entkalkungsmittel, löst dieses und wird als Gemisch am Gemischauslass in das Strömungsleitungssystem abgeführt.
Nachteilig ist bei dieser Lösung allerdings, dass der Anwender vor dem Entkalkungsvorgang zunächst je eine vorgeschriebene Dosis Entkalkungsmittel sowie Wasser in den Vorratsbehälter einfüllen muss, um erst anschließend die Entkalkung durchführen zu können. Darüber hinaus hat sich die beschriebene Durchlaufströmung als nachteilig herausgestellt, weil nicht immer sichergestellt ist, dass das in den Vorratsbehälter eingefüllte Wasser auch tatsächlich die gesamte Dosis Entkalkungsmittel löst. Die chemische Reaktion der Lösung ist nämlich sehr stark temperaturabhängig, sodass Schwankungen sich hier nachteilig auswirken können. Die Folgen eines nicht vollständig gelösten Entkalkungsmittels sind jedoch gravierend, da die Wirkung nicht in erforderlichem Maße einsetzt. Somit besteht der Bedarf, das Entkalkungsmittel sehr genau dosierbar einzusetzen und einen Vorrat bereitzustellen, der eine wirksame Entkalkung des Strömungsleitungssystems über einen langen Zeitraum hinweg ermöglicht. Hieraus ergibt sich jedoch auch ein weiteres Problem dieser bekannten Ausführung. Da sich der Vorratsbehälter unmittelbar in dem Teil des Strömungsleitungssystems befindet, der auch für die Zubereitung der Getränke benutzt wird, ergibt sich, sofern während des Entkalkungsvorganges möglicherweise nicht das gesamte Entkalkungsmittel gelöst werden konnte, der Nachteil, dass noch vorhandenes Entkalkungsmittel während der Getränkezubereitung gelöst wird und somit in das Getränk gelangen kann. Dies hat nicht nur geschmackliche Nachteile. Vielmehr besteht die Gefahr gesundheitlicher Beeinträchtigungen.

Der Erfindung stellt sich somit das Problem, einen Vorratsbehälter für eine Entkalkungsvorrichtung bereitzustellen, der eine sehr genaue Dosierung des dem Strömungsleitungssystem zugeführten Entkalkungsmittels ermöglicht, wobei bevorzugt eine exakte Trennung des Wasser führenden Strömungsleitungssystems von dem Teil des Strömungsleitungssystem möglich sein sollte, in dem sich der Vorratsbehälter befindet. Weiterhin ist anhand eines Getränkeautomaten darzustellen, wie ein solcher Vorratsbehälter Verwendung finden kann und ein Verfahren zur Entkalkung eines derartigen Getränkeautomaten anzugeben, das eine möglichst umfassende und gründliche Entkalkung des Strömungsleitungssystems erlaubt.

Erfindungsgemäß wird dieses Problem durch einen Vorratsbehälter mit den Merkmalen des Patentanspruchs 1, durch einen Getränkeautomaten mit den Merkmalen des Patentanspruches 14 sowie durch ein Verfahren zur Entkalkung eines Getränkeautomaten nach dem Patentanspruch 17 gelöst.

Vorteilhafte Ausgestaltungen und Weiterbildungen der Erfindung ergeben sich aus den jeweils nachfolgenden Unteransprüchen.

Ein Vorratsbehälter als Bestandteil einer Entkalkungsvorrichtung eines Strömungsleitungssystems, mit einem Gehäuse, das einen durch eine Wasserquelle gespeisten Wasserzulauf zu einer Vorratskammer mit einem darin aufgenommenen, wasserlöslichen Entkalkungsmittel aufweist, wurde erfindungsgemäß dahingehend weitergebildet, dass der Vorratsbehälter eine mit der Vorratskammer flüssigkeitsleitend verbundene Bodenkammer zur Sammlung des durch das Wasser gelösten Entkalkungsmittels aufweist, in die eine Kapillarleitung zur Abführung der Lösung mündet.

Die mit der Erfindung erreichbaren Vorteile bestehen neben der Möglichkeit, die Kapillarleitung und damit den Zufluss des gelösten Entkalkungsmittels zum Strömungsleitungssystem zu unterbrechen, auch darin, dass in dem Vorratsbehälter eine ausreichende Menge des Entkalkungsmittels aufbewahrt werden kann, deren Lösung und Entnahme jeweils nur bedarfsgerecht erfolgt. Ein derartiger, einmal befüllter Vorratsbehälter kann durchaus für einen Zeitraum von einem Jahr oder länger zur Verfügung stehen, um die erforderlichen Entkalkungsvorgänge durchzuführen. Dies rührt daher, dass stets nur ein Teil des im Vorratsbehälter enthaltenen Entkalkungsmittels durch das frisch zugeführte Wasser in Lösung übergeht, weil innerhalb des Vorratsbehälters bevorzugt eine gesättigte Lösung erzeugt wird und sich ein chemisches Gleichgewicht einstellt. Die genaue Dosierbarkeit hat jedoch auch den Vorzug, dass die benötigte Menge gelösten Entkalkungsmittels, die dem Strömungsleitungssystems zugeführt wird, exakt dem Härtegrad des lokal gegebenen Wassers angepasst werden kann. Ein besonders sparsamer Umgang mit den vorhandenen Ressourcen ist daher selbstverständlich möglich, was einen wesentlichen Beitrag zum Umweltschutz mit sich bringt.
Darüber hinaus kann eine exakte Trennung zwischen dem Teil des Strömungsleitungssystems, dass zur Zubereitung der Getränke benutzt wird und dem Teil des Strömungsleitungssystems, in dem sich der Vorratsbehälter für eine Entkalkung befindet, dadurch erreicht werden, dass der Vorratsbehälter als ein Bypass in das Strömungsleitungssystem integriert wird. Mit anderen Worten befindet sich der Vorratsbehälter in einem durch Absperrventile abtrennbaren und von dem Wasser führenden Bereich abgezweigten Teil des Strömungsleitungssystems.
Hinsichtlich des Entkalkungsmittels ist festzuhalten, dass dieses bevorzugt einen zähflüssigen oder pulverförmigen Zustand beziehungsweise eine aus Pulver gepresste Tablettenform aufweist und das Entkalkungsmittel Zitronensäure, Apfelsäure oder eine andere, biologisch abbaubare Säure ist. Der Einsatz eines pulverförmigen oder in Tablettenform gepressten Entkalkungsmittels, das zusammen mit Wasser eine Säure bildende Eigenschaft aufweist, ermöglicht beispielsweise eine vorteilhafte Portionierung. Das Entkalkungsmittel bildet dabei im Gemisch mit Wasser eine Säure, weil sich Säure in besonders vorteilhafter Weise zum Auflösen von Kalk eignet. Je stärker dissozüerend die Säure ist, umso schneller erfolgt die Befreiung des Strömungsleitungssystems und eventuell darin enthaltener Aggregate von Kalkrückständen. Die Tablettenform oder allgemeiner ausgedrückt die gepresste und somit komprimierte Darreichung des Entkalkungsmittels, beziehungsweise ein pulverförmiges Entkalkungsmittel bieten jedoch darüber hinaus weitere Vorteile. Zunächst kann der Vorratsbehälter im Vergleich zu flüssigen Entkalkungsmitteln oder Kationentauschern verhältnismäßig klein ausgelegt werden. Darüber hinaus besteht bei flüssigen Entkalkungsmitteln ein Exportproblem, das aus dem Verbot der grenzüberschreitenden Überführung von Flüssigkeiten herrührt. Hier sind zumeist aufwändige Zulassungsverfahren erforderlich, um grenzüberschreitend Exporte vornehmen zu können. Ein anderer Vorzug pulverförmiger Entkalkungsmittel ist auch darin zu sehen, dass Pulver auch unter extremen thermischen Bedingungen keine Aggregatzustandänderungen erfährt.
So sind Lager- oder Transportbedingungen im Bereich von -20 °C bis +70 °C keine Seltenheit und können ausschließlich von pulverförmigen Entkalkungsmitteln problemlos überstanden werden, ohne dass Qualitätseinbußen zu befürchten sind. Flüssige Entkalkungsmittel bergen zudem das Risiko, dass bei einer Beschädigung der Verpackung das Entkalkungsmittel ausläuft. Die dadurch hervorgerufenen Schäden sind durch pulverförmige Entkalkungsmittel vermeidbar.
Da es sich bei einer Säure in Abhängigkeit von ihrer Konzentration möglicherweise um ein sehr aggressives Medium handelt, spielt ferner der Schutz der Gesundheit und der Umwelt eine ganz besondere Rolle. Aus diesem Grund ist nicht jede Säure uneingeschränkt für die erfindungsgemäßen Zwecke einsetzbar. Schließlich muss auch daran gedacht werden, das mit einem derartigen Entkalkungsmittel unter Umständen Laien umgehen. Hier sind Unfallgefahren grundsätzlich auszuschließen. Deshalb wird vorgeschlagen, dass das Entkalkungsmittel Zitronensäure, Essigsäure oder eine andere, biologisch abbaubare Säure ist. Damit treten bei der Entsorgung der Endprodukte des Entkalkungsvorganges keine Probleme mehr auf. Die Säure ist zudem einfach zu handhaben und ruft selbst bei einer gegebenenfalls unsachgemäßen Anwendung keine extrem folgenschweren Schädigungen hervor.
Weitere Probleme bei Wasser führenden Strömungsleitungssystemen bestehen in der Gefahr einer Verkeimung des Strömungsleitungssystems. Eine Keimbildung ist insbesondere zu beobachten, wenn die Flüssigkeit über eine gewisse Zeit in dem Strömungsleitungssystem steht und/oder wenn ein warmes Umfeld existiert, das die Keimentwicklung zusätzlich begünstigt. Wird ein derartiges Strömungsleitungssystem nicht regelmäßig hinreichend gereinigt und nicht ebenso regelmäßig von Ablagerungen, wie dem zuvor beschriebenen Kalk, befreit, fördert dies auch eine Verkeimung, was jedoch insbesondere bei Getränkeautomaten problematisch ist. Diese Überlegungen haben dazu geführt, dass dem Entkalkungsmittel ein Entkeimungsmittel beigemischt wird, so dass nachfolgend der Begriff "Entkalkungsmittel" synonym dafür zu verstehen ist, dass hier auch ein Entkeimungsmittel enthalten sein kann. Ein derartiges Entkeimungsmittel kann beispielsweise Sorbinsäure sein. Bezüglich der erfindungsgemäßen Kapillarleitung ist noch anzumerken, dass die Länge und der Innendurchmesser der Kapillarleitung das Druckverhältnis in der Kapillarleitung bestimmen. Bevorzugt ist daher als Kapillarleitung eine Strömungsleitung mit sehr geringem Innendurchmesser und einer in Relation hierzu verhältnismäßig großen Länge einzusetzen.

Gemäß einer ersten Ausgestaltung der Erfindung wird vorgeschlagen, dass die während eines Entkalkungsvorganges über die Kapillarleitung dem Strömungsleitungssystem zugeführte Menge gelösten Entkalkungsmittels annähernd der Menge des der Vorratskammer über den Wasserzulauf zugeführten Wassers entspricht. Mit anderen Worten wird bei diesem ersten Vorschlag das Prinzip der Volumenverdrängung genutzt und nur so viel Wasser zugeführt, wie Entkalkungsmittel in das Strömungsleitungssystem abgegeben werden soll.

Alternativ hierzu geht eine andere erfindungsgemäße Weiterbildung dahin, die Kapillarleitung mit ihrem der Bodenkammer entgegen gesetzten Ende derart in eine Wasser führende Strömungsleitung des Strömungsleitungssystems münden zu lassen, dass durch die Wasserströmung dieser Strömungsleitung ein das gelöste Entkalkungsmittel fördernder Unterdruck in der Kapillarleitung gegeben ist. Hierbei wird folglich ein Unterdruckprinzip eingesetzt, bei dem die über die Kapillarleitung abgeführte Menge des gelösten Entkalkungsmittels dem Druck in der zugehörigen Strömungsleitung entspricht.
So kann beispielsweise die Menge des je Entkalkungsvorgang aus der Kapillarleitung abgeführten Entkalkungsmittels 0,2 bis 0,4 ml betragen.
Dies bedeutet jedoch, dass die Menge des der Vorratskammer zur Entkalkung zugeführten frischen Wassers ebenfalls weniger als 1 ml beträgt.

Für eine optimale Durchführung der Entkalkung eines Strömungsleitungssystems haben sich Konzentrationen des Entkalkungsmittels zwischen 10 und 50 mmol/l als besonders vorteilhaft herausgestellt. In dieser Größenordnung kann ein vollständig befüllter Vorratsbehälter länger als ein Jahr Verwendung finden, ohne dass er nachgefüllt werden muss und die erforderliche Intensität der Entkalkung ist dennoch gegeben.

Eine Weiterbildung der Erfindung sieht darüber hinaus vor, dass die Kapillarleitung zumindest abschnittsweise spiralförmig gewickelt ist. Wie zuvor bereits erwähnt wurde, spielt das Längen-Durchmesserverhältnis der Kapillarleitung eine maßgebliche Rolle für die gezielte Abgabe des gelösten Entkalkungsmittels in das Strömungsleitungssystem. Da der Vorratsbehälter baulich nicht allzu groß ausfallen soll, ist es von Vorteil, wenn die Kapillarleitung innerhalb des Vorratsbehälters spiralförmig gewickelt wird. Dadurch kann wertvoller Bauraum eingespart und der Vorratsbehälter sehr kompakt ausgeführt werden. Eine Möglichkeit besteht dabei darin, die Kapillarleitung im Bereich der Vorratskammer, also um den Außenumfang der Vorratskammer herum zu wickeln. Eine weitere Möglichkeit besteht darin, die Kapillarleitung innerhalb der Bodenkammer gewunden zu verlegen.

Eine andere, sehr vorteilhafte Maßnahme entsprechend einem Vorschlag nach der Erfindung besteht darin, dass die Kapillarleitung eine Drosselstelle aufweist und/oder eine den Vorratsbehälter mit frischem Wasser speisende Strömungsleitung des Strömungsleitungssystems eine Drosselstelle aufweist. Hierbei führt die Drosselstelle in der Strömungsleitung zur Zuführung frischen Wassers dazu, dass sich in dieser Leitung ein Rückstau bildet, der dazu führt das eine genau bestimmbarer Menge frischen Wassers in den Vorratsbehälter gedrückt wird und damit die Lösung des Entkalkungsmittels beziehungsweise dessen Verdrängung bewirkt, so dass das gelöste Entkalkungsmittel über die Kapillarleitung in das Strömungsleitungssystem abgegeben werden kann. Anstelle der erwähnten Drosselstelle, die ganz allgemein eine Verengung der Strömungsleitung bedeutet, kann selbstverständlich auch eine schwenkbare Klappe oder eine insgesamt verkleinerte Fluidleitung beziehungsweise Strömungsleitung verwendet werden.
Die Kapillarleitung stellt ihrerseits durch ihren reduzierten Innendurchmesser bereits eine Drossel dar, kann jedoch darüber hinaus mit einer zusätzlichen Drosselstelle ausgestattet werden, um beispielsweise damit die Strömungsverhältnisse weiter zu verbessern.

Auch wenn erfindungsgemäß ein einmal befüllter Vorratsbehälter für einen sehr langen Zeitraum nutzbar ist, kommt irgendwann der Zeitpunkt, zu dem frisches Entkalkungsmittel aufgefüllt werden muss. Dieser Arbeitsgang sollte möglichst anwenderfreundlich gestaltet sein, weshalb eine Ausgestaltung der Erfindung dahin geht, dass das Gehäuse des Vorratsbehälters durch einen Deckel verschlossen ist, an dem ein Anschlusszapfen zur lösbaren Verbindung mit einer korrespondierenden Aufnahmevorrichtung ausgebildet ist. Mit dem am Deckel des Vorratsbehälters ausgebildeten Anschlusszapfen lässt sich der Vorratsbehälter insgesamt im Sinne einer Steckverbindung oder einer Klemmverbindung sehr einfach und sicher in der korrespondierenden Aufnahmevorrichtung fixieren beziehungsweise aus der Aufnahmevorrichtung lösen. Neben den genannten Beispielen kann auch eine Schnappverbindung oder ein Bajonettverschluss zum Einsatz kommen. Von Bedeutung ist lediglich, dass der Anschlusszapfen und die Aufnahmevorrichtung zueinander komplementäre Konturen aufweisen und auf einfache Weise formschlüssig miteinander verbunden werden können.

Wie eingangs bereits ausgeführt wurde, ist es von besonderer Bedeutung, dass eine strikte Trennung zwischen dem Frischwasser führenden Teil des Strömungsleitungssystems und dem Teil des Strömungsleitungssystems, indem sich der eine Entkalkungsvorrichtung bildende Vorratsbehälter befindet, vorzusehen. Aus diesem Grund wird vorgeschlagen, dass die dem Vorratsbehälter Wasser zuführende Strömungsleitung beziehungsweise der Wasserzulauf ein Einwegventil aufweist, das strömungstechnisch betrachtet unmittelbar vor dem Deckel angeordnet oder in den Deckel integriert ist. Mit Hilfe des Einwegventils kann zwar frisches Wasser in den Vorratsbehälter gelangen, ein Rückfluss gelösten Entkalkungsmittels ist jedoch nicht möglich und wird durch das Einwegventil verhindert.

Da das Entkalkungsmittel bevorzugt in Pulver- oder Tablettenform zur Verfügung steht, geht ein weiterführender Vorschlag nach der Erfindung dahin, dass zwischen der Vorratskammer und der Bodenkammer eine siebartige Zwischenwand angeordnet ist. Die siebartige Zwischenwand ist dabei in der Lage, gelöstes Entkalkungsmittel ungehindert in die Bodenkammer fließen zu lassen und ist gleichzeitig geeignet, das pulverförmige oder in Tablettenform in der Vorratskammer aufgenommene Entkalkungsmittel von der Lösung zu trennen. Auf diese Weise lässt sich auch eine Verstopfung der mit einem relativ geringen Innendurchmesser versehenen Kapillarleitung auf einfache Weise verhindern.

Eine weiterführende Maßnahme hierzu kann darin gesehen werden, zwischen der Bodenkammer und der Unterseite des Entkalkungsmittels ein austauschbares Filterelement anzuordnen. Das Filterelement ist insbesondere von Vorteil, wenn ein pulverförmiges Entkalkungsmittel zum Einsatz kommt, da hierbei die Gefahr größer ist, das feinste Partikel in die Bodenkammer gelangen, als bei einem in Tablettenform zur Verfügung gestellten Entkalkungsmittel. Als Filterelement lässt sich beispielsweise ein einfaches Vlies verwenden. Natürlich sind auch andere Filterelemente durchaus geeignet, die Flüssigkeit von gröberen Partikeln zu trennen.

Da das Entkalkungsmittel über einen längeren Zeitraum betrachtet zunehmend in Lösung übergeht, wäre es von Vorteil, wenn eine Möglichkeit zur Anzeige des Füllstandes innerhalb der Vorratskammer des Vorratsbehälters bestünde. Zudem sollte verhindert werden, dass beispielsweise durch ein Anhaften des Entkalkungsmittels an der Innenwand der Vorratskammer ein fehlerhafter Füllstand vorgetäuscht wird. Eine Ausgestaltung der Erfindung sieht daher vor, oberhalb des in der Vorratskammer aufgenommenen Entkalkungsmittels ein innerhalb der Vorratskammer verschiebbares Druckelement anzuordnen. Als Druckelement kann auf einfache Weise eine Scheibe dienen, die auf der Oberseite des Entkalkungsmittels aufliegt und mit zunehmendem Verbrauch des Entkalkungsmittels nach unten sinkt. Das Druckelement hat dabei auch den Vorzug, dass sein Eigengewicht eine Verdichtung des Entkalkungsmittels und ein Nachschieben innerhalb der Vorratskammer bewirkt. Als Anzeige des Füllstandes der Vorratskammer kann beispielsweise eine optische Anzeige gewählt werden, indem längs der Vorratskammer ein durchsichtiger Bereich vorgesehen wird und das als Scheibe ausgeführte Druckelement eine farbliche Markierung aufweist, die nach außen hin sichtbar ist.

Wesentlich komfortabler ist es allerdings, wenn das Druckelement einen mit einem Messwertaufnehmer korrespondierenden Messwertgeber zur Füllstandserfassung der Vorratskammer aufweist.
Einer besonders einfachen Ausführungsform folgend kann hierbei der Messwertgeber ein Magnet und der Messwertaufnehmer ein auf ein magnetisches Signal reagierender Messwertaufnehmer sein oder umgekehrt. Auf diese Weise ließe sich eine elektronische Signalverarbeitung umsetzen, so dass der Füllstand des Vorratsbehälters auch an einem Anzeigedisplay visuell sichtbar gemacht werden kann.

Besonders vorteilhaft wird darüber hinaus ein Vorschlag nach der Erfindung angesehen, der darin besteht, dass der Vorratsbehälter insgesamt aus Kunststoff oder aus einem Kunststoff-Verbundmaterial hergestellt ist. Diese Werkstoffe sind flüssigkeitsdicht und weisen ein sehr geringes Eigengewicht auf. Ferner ist die Herstellung des Vorratsbehälters aus Kunststoff kostengünstig und einfach umsetzbar. Es können beliebige Geometrien erstellt werden, ohne dass es aufwändiger Nacharbeiten bedarf. Natürlich ist es denkbar, den Vorratsbehälter als einstückiges Kunststoff Formteil herzustellen. Eine andere Möglichkeit besteht jedoch darin, die Bodenkammer des Vorratsbehälters separat herzustellen und mit dem Vorratsbehälter zu verbinden. Je nach ausgewähltem Kunststoff kann eine derartige Verbindung beispielsweise eine Klebeverbindung oder eine Ultraschall-Schweißverbindung sein. Der ebenfalls separat hergestellte Deckel sollte abnehmbar sein, um frisches Entkalkungsmittel nachfüllen zu können. Ebenso lässt sich jedoch auch eine Öffnung in dem Deckel vorsehen, durch die das Entkalkungsmittel in die Vorratskammer eingebracht wird. In diesem Fall kann der Deckel ebenso wie die Bodenkammer fest mit dem Gehäuse des Vorratsbehälters verbunden werden.

Ein erfindungsgemäßer Getränkeautomat zur Herstellung mit Wasser erzeugter Getränke mit einem zuvor beschriebenen Vorratsbehälter ist dadurch gekennzeichnet, dass das Strömungsleitungssystem des Getränkeautomaten eine Pumpe, mindestens eine Entnahmeeinrichtung und wenigstens ein Mehrwegeventil aufweist und der Vorratsbehälter strömungstechnisch in einen Bypass des Wasserkreislaufes des Getränkeautomaten integriert ist.
Unter einer "Entnahmeeinrichtung" ist dabei im Sinne der Erfindung beispielsweise in einem als Kaffeeautomat ausgeführten Getränkeautomaten eine Dampfdüse, eine Ausgabestelle für Heißwasser oder zum Beispiel die Kaffeeausgabedüse zu verstehen. Ebenso kann es sich hier bei anderen Getränkeautomaten ganz allgemein um die Zapfstelle des Getränks handeln.

Die Pumpe dient der Förderung der Flüssigkeiten und/oder Gase innerhalb des Strömungsleitungssystems sowie dem erforderlichen Druckaufbau. Als Quelle für das Frischwasser, welches für die Bereitung des Getränkes und/oder der Durchführung der Entkalkung dient, kann in einfacher Weise ein Wasserbehälter zum Einsatz kommen. Andere Lösungen weisen einen festen Wasseranschluss auf, was hier explizit nicht ausgeschlossen wird und synonym zu verstehen ist.
Das vorgeschlagene, mindestens eine Mehrwegeventil innerhalb des Strömungsleitungssystems des Getränkeautomaten dient insbesondere dazu, einen unerwünschten Eintrag des gelösten Entkalkungsmittels in den Wasser führenden Teil des Strömungsleitungssystems zu verhindern. Der Wasser führende Teil des Strömungsleitungssystems ist nämlich der Zubereitung der Getränke beziehungsweise der Herstellung von Wasserdampf vorbehalten und muss frei von Entkalkungsmittel sein, um gesundheitliche oder geschmackliche Beeinträchtigungen zu verhindern.
Das Mehrwegeventil in dem Strömungsleitungssystem des Getränkeautomaten hat eine wesentliche Bedeutung, weil es auch dazu dient, den als Bypass ausgeführten Teil des Strömungsleitungssystems, in den der Vorratsbehälter integriert ist, von dem Teil des Strömungsleitungssystems zu trennen, der ausschließlich der Wasserführung und der Zubereitung der Getränke beziehungsweise von Heißwasserdampf dient. Die Bypass-Lösung hat den entscheidenden Vorteil, dass hiermit sehr einfach und zuverlässig vermieden werden kann, dass Rückstände des Entkalkungsmittels in den Kreislauf des Strömungsleitungssystems gelangen, wenn dieses zur Bereitung eines Getränkes genutzt wird.

Wird das Mehrwegeventil gemäß einem weiterführenden Vorschlag nach der Erfindung als Dreiwegeventil ausgeführt, so können damit mehrere Schaltstellungen umgesetzt werden.

Zusätzlich zu dem bereits erwähnten Mehrwegeventil ist es von Vorteil, wenn die einzelnen Entnahmeeinrichtungen gesondert oder in Gruppen ansteuerbar sind, um damit verschiedene Optionen der Getränkezubereitung zu haben. Deshalb geht eine Ausgestaltung der Erfindung dahin, in Strömungsrichtung betrachtet vor der mindestens einen Entnahmeeinrichtung wenigstens ein zur Ansteuerung der Entnahmeeinrichtung geeignetes Ventil in das Strömungsleitungssystem zu integrieren. Bevorzugt werden entsprechend diesem Vorschlag mehrere Ventile eingesetzt. So ist beispielsweise denkbar, dass jeder Entnahmeeinrichtung je ein Ventil zugeordnet ist.

Das erfindungsgemäße Verfahren zur Anwendung eines Vorratsbehälters zur Entkalkung eines Getränkeautomaten ist gekennzeichnet durch folgende Verfahrensschritte:
- Einbringung des gelösten Entkalkungsmittels in das Strömungsleitungssystem,
- Öffnen des Ventils vor der Entnahmeeinrichtung, bis ein Austritt des gelösten Entkalkungsmittels an der wenigstens einen Entnahmeeinrichtung zu verzeichnen ist,
- Schließen des Ventils und Einwirkung des Entkalkungsmittels auf das Strömungsleitungssystem für eine Zeitdauer,
- Spülung des Strömungsleitungssystems zu Reinigungszwecken mit frischem Wasser.

Der besondere Vorzug dieses Verfahrens besteht in der Möglichkeit, die Strömungsleitungen des Strömungsleitungssystems von Kalkrückständen zu befreien und gegebenenfalls zu entkeimen und darüber hinaus auch das Ventil sowie die mindestens eine Entnahmeeinrichtung zu entkalken.

Von Bedeutung bei der Erstbefüllung der Vorratskammer mit Wasser ist, dass zunächst nur soviel Wasser aufgefüllt wird, dass so viel Entkalkungsmittel in Lösung übergeht, bis die Bodenkammer mit der Lösung des Entkalkungsmittels gefüllt ist. Anders ausgedrückt wird nicht von Anfang an das gesamte Entkalkungsmittel gelöst, sondern nur ein Teil davon. In der Bodenkammer bildet sich erfahrungsgemäß eine gesättigte Lösung aus, die als Konzentrat über die Kapillarleitung in das Strömungsleitungssystem gegeben werden kann, wenn ein Entkalkungsvorgang erfolgen soll.
Alternativ hierzu ist es jedoch auch möglich, bei der Erstbefüllung der Vorratskammer mit Wasser soviel Wasser aufzufüllen, dass die Vorratskammer und die Bodenkammer befüllt sind und sich damit eine Lösung des Entkalkungsmittels ausbildet, bis sich eine gesättigte Lösung in der Vorratskammer einstellt.

Wie bereits zuvor ausgeführt wurde, kann das Dreiwegeventil zur Trennung und Verbindung des Wasser führenden Teils des Strömungsleitungssystems von dem den Vorratsbehälter mit dem Entkalkungsmittel aufweisenden Teil des Strömungsleitungssystems dienen. Hier ist es von besonderem Vorteil, dass nur ein Dreiwegeventil erforderlich ist, um mehrere Funktionen zu erfüllen. Damit wird der Aufbau des Strömungsleitungssystems insgesamt vereinfacht.

Um eine optimale Entkalkung auch des Dreiwegeventils zu erreichen geht ein weiterführender Vorschlag nach der Erfindung dahin, das Dreiwegeventil während des Entkalkungsvorganges mindestens einmal jede seiner möglichen Stellungen einnehmen zu lassen, um vom Entkalkungsmittel durchströmt zu werden. Auf diese Weise können sämtliche Teile des Dreiwegeventil ebenfalls von Kalk und gegebenenfalls von Keimen befreit werden.

Die Erfindung wird nachfolgend anhand der beigefügten Zeichnungen näher erläutert. Die dargestellten Ausführungsbeispiele stellen keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
- Figur 1:: einen Längsschnitt durch einen Vorratsbehälter und einen Teil einer angrenzenden Aufnahmeeinrichtung,
- Figur 2:: einen Blick in die Bodenkammer des Vorratsbehälters in einer räumlichen Ansicht,
- Figur 3:: einen Getränkeautomaten mit einer Vorratskammer und
- Figur 4:: einen vereinfachten Schaltplan eines Strömungsleitungssystems innerhalb eines Getränkeautomaten.

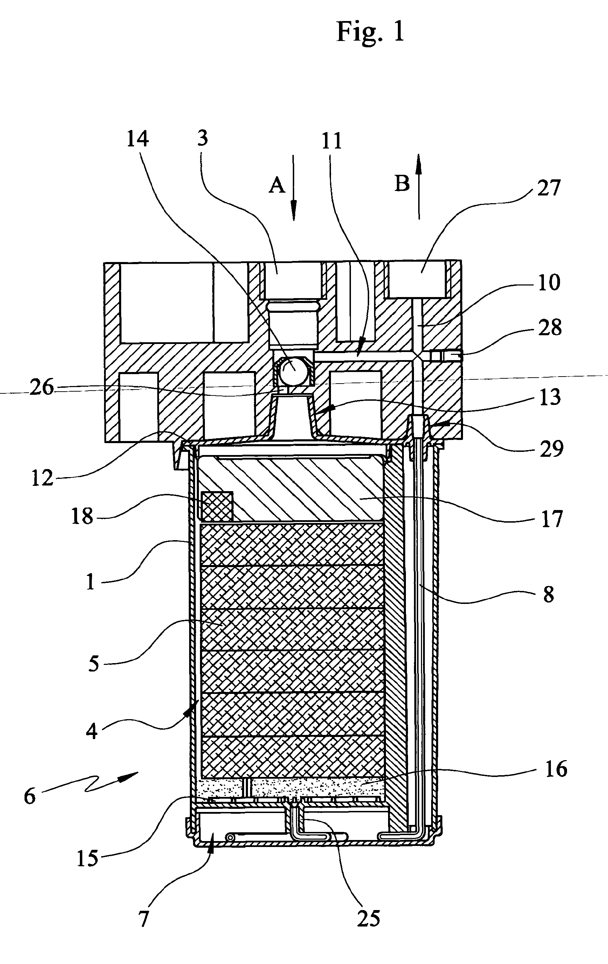

Der Vorratsbehälter 6 in Figur 1 ist in dieser Schnittdarstellung mit einem Teil einer angrenzenden Aufnahmeeinrichtung gezeigt. Der Vorratsbehälter 6 besteht aus einem aus Kunststoff gefertigten Gehäuse 1, indem eine Vorratskammer 4 ausgebildet ist. Den oberen Abschluss des Gehäuses 1 bildet ein Deckel 12, der flüssigkeitsdicht mit dem Gehäuse 1 verbunden ist und in seinem zentralen Bereich einen domartig gestalteten Anschlusszapfen 13 aufweist, mit dem der Behälter über eine Klemmverbindung dichtend in der Aufnahmeeinrichtung fixiert ist. Den unteren Teil des Vorratsbehälters 6 bildet eine Bodenkammer 7, die als separates Bauteil aus einem Kunststoff gefertigt ist und durch ein Ultraschall- Schweißverfahren mit dem Gehäuse 1 verbunden wurde, so dass der Vorratsbehälter 6 insgesamt eine flüssigkeitsdichte Einheit darstellt. Zwischen der Vorratskammer 4 und der Bodenkammer 7 ist zur Trennung eine Zwischenwand 15 eingefügt, die zumindest abschnittsweise eine siebartige Struktur aufweist und zur Filterung fester Bestandteile des gelösten Entkalkungsmittels dient. Eine weitere Verbesserung der Filtrierung kann dadurch erreicht werden, dass oberhalb der Zwischenwand 15 ein Filterelement 16 eingesetzt wird, bei dem es sich vorliegend um ein Vlies handelt. In der Vorratskammer 4 befinden sich in axialer Richtung übereinander gestapelt, mehrere Tabletten gepressten Entkalkungsmittels 5. Oberhalb des in der Vorratskammer 4 vorhandenen Entkalkungsmittels 5 ist zudem ein Druckelement 17 angeordnet, dessen Gewicht das Entkalkungsmittel 5 in Richtung Bodenkammer 7 drückt und dadurch einen permanenten Nachschub bewirkt. Mithilfe des Druckelementes 17 kann somit ein Anhaften des Entkalkungsmittels 5 an der Innenwand der Vorratskammer 4 vermieden werden. Die Verstärkung der Gewichtskraft durch eine zusätzliche Feder kann vorgesehen werden, ist jedoch nicht in jedem Fall erforderlich und bei der hier dargestellten Variante auch nicht notwendig. Ein weiterer, sehr wesentlicher Aspekt dieses Druckelementes 17 besteht darin, dass das Druckelement 17 auch für die Anzeige des Füllstandes der Vorratskammer 4 Verwendung findet. Hierzu ist das Druckelement 17 mit einem Messwertgeber 18 ausgestattet, bei dem es sich vorliegend um einen Magneten handelt, zu dem korrespondierend in dem Vorratsbehälter 6 wenigstens ein Messwertaufnehmer vorhanden ist, der auf das magnetische Signal des Messwertgebers 18 empfindlich reagiert. Durch diese Maßnahme lässt sich auf einfache Weise eine elektronische Signalerfassung erreichen, die beispielsweise zusammen mit einem hier nicht dargestellten Anzeigedisplay die Möglichkeit bietet, Auskunft über den aktuellen Füllstand des Vorratsbehälters 6 zu geben. Eine weitere Besonderheit der in Figur 1 gezeigten Ausführungsvariante eines Vorratsbehälters 6 besteht darin, dass in die Bodenkammer 7 eine Kapillarleitung 8 mündet, die im Bereich der Bodenkammer 7 spiralförmig gewunden ist. Mit Hilfe dieser, einen sehr geringen Innendurchmesser und eine erhebliche Länge aufweisenden Kapillarleitung besteht die Möglichkeit, den Eintrag des gelösten Entkalkungsmittels in das Strömungsleitungssystem sehr exakt zu steuern, was nachfolgend noch näher erläutert wird.
Die Kapillarleitung 8 mündet innerhalb der Bodenkammer 7 in eine Hülse 25, was einerseits der Befestigung der Kapillarleitung 8 dient und andererseits durch die oberhalb des Bodengrundes der Bodenkammer 7 auslaufende Kapillarleitung 8 zusätzlich den Eintrag fester Partikel des gelösten Entkalkungsmittels verhindert, so dass dadurch eine Verstopfung der filigranen Kapillarleitung 8 vermieden werden kann.
Zur Verbindung der Kapillarleitung 8 mit der den Vorratsbehälter 6 aufnehmenden Aufnahmeeinrichtung dient ferner ein Verbindungsflansch 29 im deckelseitigen Teil des Vorratsbehälters 6.
Wie bereits ausgeführt wurde, ist der Vorratsbehälter 6 an seinem Deckel 12 mit einem domartigen Anschlusszapfen 13 ausgestattet, der in eine korrespondierende Anschlussgeometrie der Aufnahmeeinrichtung eingesetzt ist. In der Anschlussgeometrie ist ebenfalls ein Wasserzulauf 3 vorhanden, der über ein Einwegventil 14 und eine im Querschnitt reduzierte Einlauföffnung 26 den Vorratsbehälter 6 in Richtung des Pfeils "A" immer dann mit frischem Wasser versorgt, wenn ein Entkalkungsvorgang durchgeführt werden soll. Das Einwegventil 14 dient dabei dem Zweck, zu verhindern, das gelöstes Entkalkungsmittel unmittelbar in die frisches Wasser führende Strömungsleitung 10 gelangt. Mit anderen Worten soll hier ein Rückfluss verhindert werden. Die Strömungsleitung 10 ist, solange kein Entkalkungsvorgang erfolgt, ausschließlich als Frischwasserleitung nutzbar.
Zwischen dem Wasserzulauf 3 und einem Ablauf 27, dessen Strömungsrichtung durch den Pfeil "B" symbolisiert wird und der dem Anschluss des Vorratsbehälters 6 an das Strömungsleitungssystem dient, weist die Strömungsleitung 10 eine Drosselstelle 11 auf. Diese Drosselstelle 11 bewirkt einen Rückstau innerhalb des Wasserzulaufs 3, was dazu führt, dass eine genau dosierbare Menge frischen Wassers durch das Einwegventil 14 in die Vorratskammer 4 des Vorratsbehälters 6 gedrückt wird und hier einen geringen Teil des Entkalkungsmittels 5 löst. Annähernd das gleiche Volumen des gelösten Entkalkungsmittels, das als Wasser der Vorratskammer 4 zugeführt wird, kann über die Kapillarleitung 8 an das Strömungsleitungssystem abgegeben werden, wenn ein hierzu vorhandenes Ventil geöffnet wird. Die Abgabe des gelösten Entkalkungsmittels an das Strömungsleitungssystem erfolgt hierbei folglich nach dem Prinzip der Volumenverdrängung. Bei geschlossenem Ventil verhindert der Gegendruck innerhalb der Vorratskammer 4 die Einbringung des frischen Wassers in die Vorratskammer 4, sodass Entkalkungsmittel 5 nur dann gelöst wird, wenn auch tatsächlich der Bedarf danach besteht. Ein Teil der Strömungsleitung 10 ist bei dem hier dargestellten Beispiel durch einen Verschluss 28 abgesperrt, da dieser Teil der Strömungsleitung 10 nicht benötigt wird.

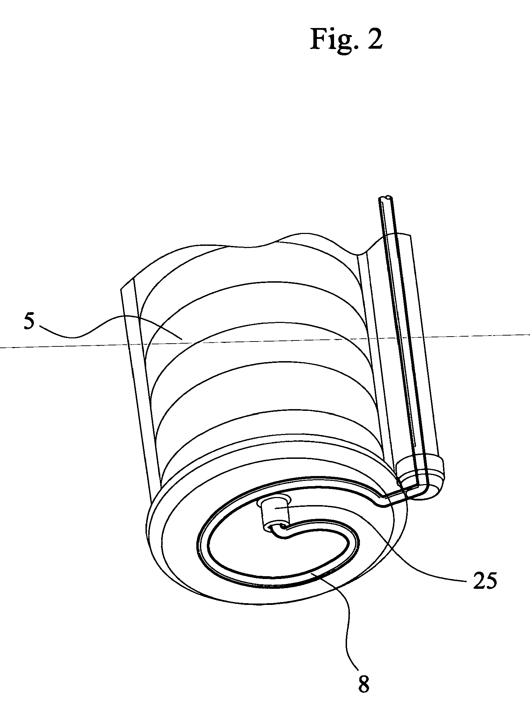

Die Figur 2 erlaubt einen Blick in die Bodenkammer 7 des Vorratsbehälters 6 in einer räumlichen Ansicht. Hierbei wurden verschiedene Teile der Vorratskammer 6 nicht dargestellt, so dass in der Figur 2 lediglich die übereinander gestapelten Tabletten aus gepresstem Entkalkungsmittel 5 sowie die isolierte Oberseite der Bodenkammer 7 zu erkennen sind. Aus der Darstellung wird ersichtlich, dass die Kapillarleitung 8 im Bereich der Bodenkammer 7 eine spiralförmig gewundene Geometrie aufweist und mit ihrem Endstück in eine Hülse 25 mündet. Die Kapillarleitung 8 ist hierbei ferner in einem separaten und nicht näher bezeichneten, hülsenförmigen Teil des Gehäuses 1 geführt.

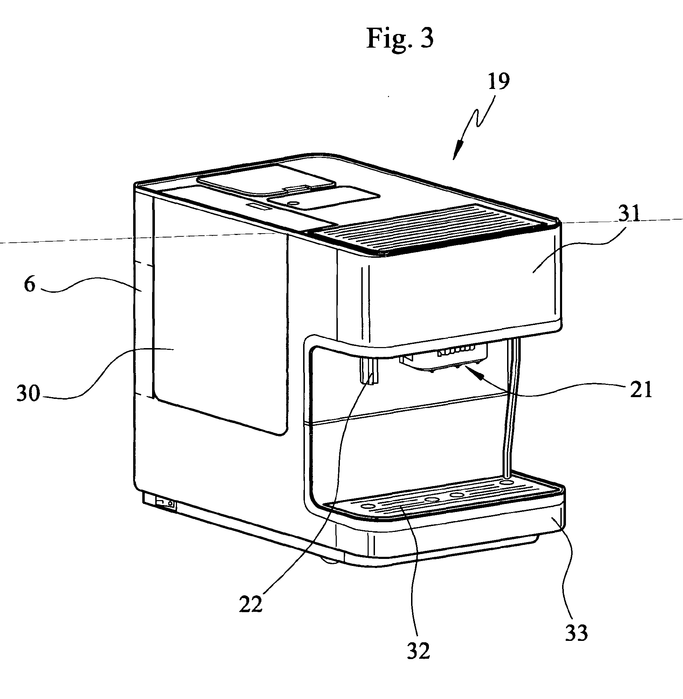

Die Figur 3 veranschaulicht am Beispiel eines Getränkeautomaten 19 die Möglichkeit, der Unterbringung eines Vorratsbehälters 6 in einem derartigen Getränkeautomaten 19. Hierfür ist seitlich des als Einzelgerät aufstellbaren Getränkeautomaten 19 ein Seitenfach 30 vorhanden, dass dem Einsetzen beziehungsweise dem Auswechseln des Vorratsbehälters 6 dient, der im Geräteinneren, hinter diesem Seitenfach 30 angeordnet ist. Im Frontbereich des Getränkeautomaten 19 verfügt dieser über einen Vorbau 31, in dem sichtgeschützt mehrere Entnahmeeinrichtungen 21, 22 untergebracht sind. Bei der Entnahmeeinrichtung 22 handelt es sich im vorliegenden Fall um eine Dampfdüse zur Abgabe heißen Wasserdampfes. Die Entnahmeeinrichtung 21 stellt eine Brüheinheit mit mehreren, zur Abgabe von Kaffeegetränken geeigneten Düsen dar. Diese Brüheinheit 21 ist zudem bei dieser Ausführung in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einen hierfür unterhalb des Abtropfbleches 32 vorhandenen Auffangbehälter abzuführen.

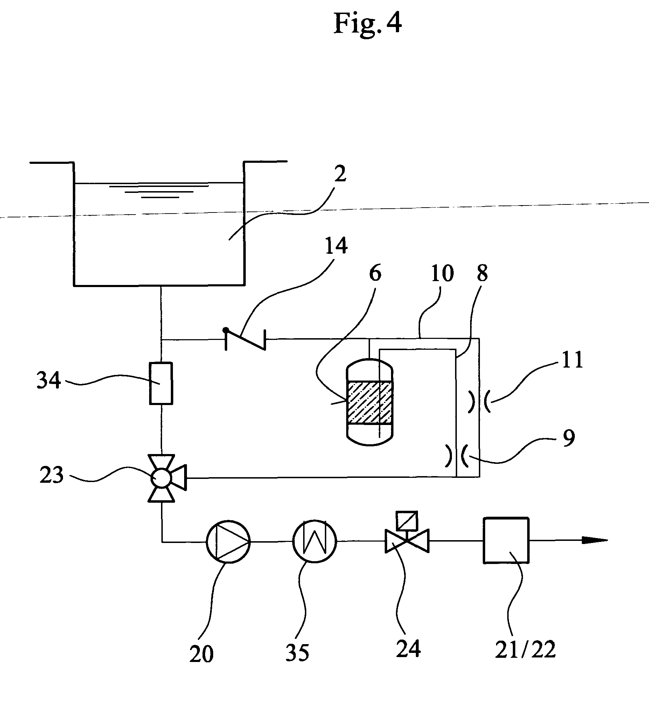

Schließlich zeigt die Figur 4 einen vereinfachten Schaltplan eines Strömungsleitungssystems innerhalb eines Getränkeautomaten 19. Von einer Wasserquelle 2 wird das Strömungsleitungssystem mit frischem Wasser versorgt. Bei der dargestellten Wasserquelle handelt es sich um einen Wassertank des Getränkeautomaten.
Das Strömungsleitungssystem setzt sich aus zwei Teilen zusammen, wobei ein erster Teil der Zubereitung von Getränken dient und der andere Teil als Bypass von diesem ersten Teil des Strömungsleitungssystems abgezweigt ist. Der Bypass enthält den Vorratsbehälter 6, so dass dieser Teil des Strömungsleitungssystems eine Entkalkungsvorrichtung darstellt, die bei Bedarf an den Wasser führenden Teil des Strömungsleitungssystems angeschlossen werden kann. Zur Verbindung des Bypasses mit oder zur Trennung des Bypasses von dem ersten Teil des Strömungsleitungssystems dient einerseits das Einwegventil 14, welches sich in der zuvor beschriebenen Weise beispielsweise oberhalb des Deckels 12 des Vorratsbehälters 6 befinden kann und andererseits ein als Dreiwegeventil ausgeführtes Mehrwegeventil 23. Zur Erzeugung der Strömung innerhalb des Strömungsleitungssystems sowie des erforderlichen Druckaufbaus dient eine Pumpe 20. Darüber hinaus weist der zur Zubereitung der Getränke genutzte Teil des Strömungsleitungssystems ein Thermostat 35 zur Erwärmung des Wassers sowie mehrere Entnahmeeinrichtungen 21, 22 auf, die in dem dargestellten Schaltplan lediglich als Blackbox angedeutet wurden und beispielsweise eine Dampfdüse 22 und/oder eine Brüheinheit 21 sind. Zur selektiven Ansteuerung der Entnahmeeinrichtungen 21, 22 dient ferner ein weiteres Mehrwegeventil 24, dass den Entnahmeeinrichtungen 21, 22 in Strömungsrichtung betrachtet vorgeschaltet ist. Darüber hinaus kann das Strömungsleitungssystem ein Messgerät zur Volumenstrommessung 34 aufweisen, dass hilfreich ist, um eine genaue Menge frischen Wassers zu bestimmen, die für die Zubereitung eines Getränkes erforderlich ist. Darüber hinaus lässt sich mit einer derartigen Messeinrichtung auch die Anzahl der hergestellten Getränke bestimmen.
Betrachtet man nun den als Bypass gestalteten, zweiten Teil des Strömungsleitungssystems, so bildet das zentrale Element der Vorratsbehälter 6, der über seinen Wasserzulauf 3 mit der Strömungsleitung 10 verbunden ist und auf diese Weise mit frischem Wasser versorgt werden kann, wenn ein Entkalkungsvorgang durchgeführt werden soll. Die in die Bodenkammer 7 mündende Kapillarleitung 8 weist in diesem Fall eine separate Drosselstelle 9 auf und ist an anderer Stelle ebenfalls an die Strömungsleitung 10 angeschlossen. Wie zuvor im Zusammenhang mit der Beschreibung der Figur 1 bereits beschrieben wurde, verfügt die Strömungsleitung 10 über eine Drosselstelle 11, so dass ein Rückstau innerhalb der Strömungsleitung 10 erreicht wird, der die Versorgung des Vorratsbehälters 6 mit frischem Wasser ermöglicht. Die Ansteuerung des Bypasses erfolgt über das Dreiwegeventil 23 in Zusammenhang mit dem Einwegventil 14.

### BEZUGSZEICHENLISTE:

- 1: Gehäuse
- 2: Wasserquelle
- 3: Wasserzulauf
- 4: Vorratskammer
- 5: Entkalkungsmittel
- 6: Vorratsbehälter
- 7: Bodenkammer
- 8: Kapillarleitung
- 9: Drosselstelle
- 10: Strömungsleitung
- 11: Drosselstelle
- 12: Deckel
- 13: Anschlusszapfen
- 14: Einwegventil
- 15: Zwischenwand
- 16: Filterelement
- 17: Druckelement
- 18: Messwertgeber
- 19: Getränkeautomat
- 20: Pumpe
- 21: Entnahmeeinrichtung
- 22: Entnahmeeinrichtung
- 23: Mehrwegeventil
- 24: Mehrwegeventil
- 25: Hülse
- 26: Einlauföffnung
- 27: Ablauf
- 28: Verschluss
- 29: Verbindungsflansch
- 30: Seitenfach
- 31: Vorbau
- 32: Abtropfblech
- 33: Abstellfläche
- 34: Messgerät zur Volumenstrommessung
- 35: Thermostat

## Patentansprüche

1. Vorratsbehälter (6) als Bestandteil einer Entkalkungsvorrichtung eines Strömungsleitungssystems, mit einem Gehäuse (1), das einen durch eine Wasserquelle (2) gespeisten Wasserzulauf (3) zu einer Vorratskammer (4) mit einem darin aufgenommenen wasserlöslichen Entkalkungsmittel (5) aufweist,
**dadurch gekennzeichnet, dass**
der Vorratsbehälter (6) eine mit der Vorratskammer (4) flüssigkeitsleitend verbundene Bodenkammer (7) zur Sammlung des durch das Wasser gelösten Entkalkungsmittels aufweist, in die eine Kapillarleitung (8) zur Abführung der Lösung mündet.

2. Vorratsbehälter nach Anspruch 1,
**dadurch gekennzeichnet, dass**
die während eines Entkalkungsvorganges über die Kapillarleitung (8) dem Strömungsleitungssystem zugeführte Menge gelösten Entkalkungsmittels annähernd der Menge des der Vorratskammer (4) über den Wasserzulauf (3) zugeführten Wassers entspricht.

3. Vorratsbehälter nach Anspruch 1,
**dadurch gekennzeichnet, dass**
die Kapillarleitung (8) mit ihrem der Bodenkammer (7) entgegen gesetzten Ende derart in eine Wasser führende Strömungsleitung des Strömungsleitungssystems mündet, dass durch die Wasserströmung dieser Strömungsleitung ein das gelöste Entkalkungsmittel fördernder Unterdruck in der Kapillarleitung (8) gegeben ist.

4. Vorratsbehälter nach einem der vorstehend genannten Ansprüche,
**dadurch gekennzeichnet, dass**
die Kapillarleitung (8) zumindest abschnittsweise spiralförmig gewickelt ist.

5. Vorratsbehälter nach einem der vorstehend genannten Ansprüche,
**dadurch gekennzeichnet, dass**
die Kapillarleitung (8) eine Drosselstelle (9) aufweist und/oder eine den Vorratsbehälter (4) mit frischem Wasser speisende Strömungsleitung (10) des Strömungsleitungssystems eine Drosselstelle (11) aufweist.

6. Vorratsbehälter nach einem der vorstehend genannten Ansprüche,
**dadurch gekennzeichnet, dass**
das Gehäuse (1) des Vorratsbehälters (4) durch einen Deckel (12) verschlossen ist, an dem ein Anschlusszapfen (13) zur lösbaren Verbindung mit einer korrespondierenden Aufnahmevorrichtung ausgebildet ist.

7. Vorratsbehälter nach Anspruch 6,
**dadurch gekennzeichnet, dass**
die dem Vorratsbehälter (4) Wasser zuführende Strömungsleitung (10) beziehungsweise der Wasserzulauf (3) ein Einwegventil (14) aufweist, das strömungstechnisch betrachtet unmittelbar vor dem Deckel (12) angeordnet oder in den Deckel (12) integriert ist.

8. Vorratsbehälter nach einem der vorstehend genannten Ansprüche,
**dadurch gekennzeichnet, dass**
zwischen der Vorratskammer (4) und der Bodenkammer (7) eine siebartige Zwischenwand (15) angeordnet ist.

9. Vorratsbehälter nach einem der vorstehend genannten Ansprüche,
**dadurch gekennzeichnet, dass**
zwischen der Bodenkammer (7) und der Unterseite des Entkalkungsmittels (5) ein austauschbares Filterelement (16) angeordnet ist.

10. Vorratsbehälter nach einem der vorstehend genannten Ansprüche,
**dadurch gekennzeichnet, dass**
oberhalb des in der Vorratskammer (4) aufgenommenen Entkalkungsmittels (5) ein innerhalb der Vorratskammer (4) verschiebbares Druckelement (17) angeordnet ist.

11. Vorratsbehälter nach Anspruch 10,
**dadurch gekennzeichnet, dass**
das Druckelement (17) einen mit einem Messwertaufnehmer korrespondierenden Messwertgeber (18) zur Füllstandserfassung der Vorratskammer (4) aufweist.

12. Vorratsbehälter nach Anspruch 11,
**dadurch gekennzeichnet, dass**
der Messwertgeber (18) ein Magnet und der Messwertaufnehmer ein auf ein magnetisches Signal reagierender Messwertaufnehmer ist.

13. Vorratsbehälter nach einem der vorstehend genannten Ansprüche,
**dadurch gekennzeichnet, dass**
der Vorratsbehälter (6) insgesamt aus Kunststoff oder aus einem Kunststoff-Verbundmaterial hergestellt ist.

14. Getränkeautomat mit einem Vorratsbehälter nach einem der vorstehend genannten Ansprüche,
**dadurch gekennzeichnet, dass**
das Strömungsleitungssystem des zur Herstellung mit Wasser erzeugter Getränke geeigneten Getränkeautomaten (19) eine Pumpe (20), mindestens eine Entnahmeeinrichtung (21, 22) und wenigstens ein Mehrwegeventil (23, 24) aufweist und der Vorratsbehälter (4) strömungstechnisch in einen Bypass des Wasserkreislaufes des Getränkeautomaten (19) integriert ist.

15. Getränkeautomat nach Anspruch 14,
**dadurch gekennzeichnet, dass**
das Mehrwegeventil (23) ein Dreiwegeventil ist.

16. Getränkeautomat nach einem der Ansprüche 14 oder 15,
**dadurch gekennzeichnet, dass**
in Strömungsrichtung betrachtet vor der mindestens einen Entnahmeeinrichtung (21, 22) wenigstens ein zur Ansteuerung der Entnahmeeinrichtung geeignetes Ventil (24) in das Strömungsleitungssystem integriert ist.

17. Verfahren zur Anwendung eines Vorratsbehälters zur Entkalkung eines Getränkeautomaten nach einem der vorstehend genannten Ansprüche 14 bis 16, **gekennzeichnet durch** folgende Verfahrensschritte:
- Einbringung des gelösten Entkalkungsmittels in das Strömungsleitungssystem,
- Öffnen des Ventils (24) vor der Entnahmeeinrichtung, bis ein Austritt des gelösten Entkalkungsmittels an der wenigstens einen Entnahmeeinrichtung (21, 22) zu verzeichnen ist,
- Schließen des Ventils (24) und Einwirkung des Entkalkungsmittels auf das Strömungsleitungssystem für eine Zeitdauer,
- Spülung des Strömungsleitungssystems zu Reinigungszwecken mit frischem Wasser.

18. Verfahren nach Anspruch 17,
**dadurch gekennzeichnet, dass**
bei der Erstbefüllung der Vorratskammer (4) mit Wasser nur soviel Wasser aufgefüllt wird, dass die Bodenkammer (7) mit einer Lösung des Entkalkungsmittels gefüllt ist oder bei der Erstbefüllung der Vorratskammer (4) mit Wasser soviel Wasser aufgefüllt wird, dass die Vorratskammer (4) und die Bodenkammer (7) befüllt sind und sich eine Lösung des Entkalkungsmittels (5) ausbildet.

19. Verfahren nach Anspruch 17 oder 18,
**dadurch gekennzeichnet, dass**
das Dreiwegeventil (23) zur Trennung und Verbindung des Wasser führenden Teils des Strömungsleitungssystems mit dem den Vorratsbehälter (6) mit dem Entkalkungsmittel (5) aufweisenden Teil des Strömungsleitungssystems dient.

20. Verfahren nach einem der Ansprüche 17 bis 19,
**dadurch gekennzeichnet, dass**
das Dreiwegeventil (23) während des Entkalkungsvorganges mindestens einmal jede seiner möglichen Stellungen einnimmt, um von dem gelösten Entkalkungsmittel durchströmt zu werden.

## Claims

1. Supply container (6) as a component of a descaling device of a flow-line system, comprising a housing (1), which has a water inlet (3), fed by a water source (2), to a supply chamber (4) having a water-soluble descaling agent (5) received therein,
**characterised in that**
the supply container (6) comprises a bottom chamber (7), which is in fluid communication with the supply chamber (4), for collecting the descaling agent dissolved by the water, into which chamber a capillary line (8) opens in order to discharge the solution.

2. Supply container according to claim 1,
**characterised in that**
the quantity of dissolved descaling agent fed to the flow-line system via the capillary line (8) during a descaling process corresponds approximately to the quantity of water fed to the supply chamber (4) via the water inlet (3).

3. Supply container according to claim 1,
**characterised in that**
the end of the capillary line (8) opposite the bottom chamber (7) opens into a waster-guiding flow line of the flow-line system such that a vacuum is formed in the capillary line (8) by means of the flow of water of said flow line, which vacuum conveys the dissolved descaling agent.

4. Supply container according to any of the preceding claims,
**characterised in that**
the capillary line (8) is wound in the form of a spiral at least in portions.

5. Supply container according to any of the preceding claims,
**characterised in that**
the capillary line (8) comprises a restrictor (9), and/or a flow line (10) of the flow-line system, which flow line feeds the supply container (4) with fresh water, comprises a restrictor (11).

6. Supply container according to any of the preceding claims,
**characterised in that**
the housing (1) of the supply container (4) is closed by a lid (12) on which a connecting pin (13) is formed in order to form a releasable connection to a corresponding receiving device.

7. Supply container according to claim 6,
**characterised in that**
the flow line (10), or the water inlet (3), which feeds water to the supply container (4) comprises a one-way valve (14) which, in terms of flow, is integrated immediately in front of the lid (12) or in the lid (12).

8. Supply container according to any of the preceding claims,
**characterised in that**
a sieve-like intermediate wall (15) is arranged between the supply chamber (4) and the bottom chamber (7).

9. Supply container according to any of the preceding claims, **characterised in that** a replaceable filter element (16) is arranged between the bottom chamber (7) and the lower side of the descaling agent (5).

10. Supply container according to any of the preceding claims,
**characterised in that**
a pressure element (17), which is displaceable within the supply chamber (4), is arranged above the descaling agent (5) received in the supply chamber (4).

11. Supply container according to claim 10,
**characterised in that**
the pressure element (17) comprises a sensor (18) which corresponds with a transducer for detecting the fill level of the supply chamber (4).

12. Supply container according to claim 11,
**characterised in that**
the sensor (18) is a magnet and the transducer is a transducer which reacts to a magnetic signal.

13. Supply container according to any of the preceding claims,
**characterised in that**
the supply container (6) in its entirety is made of plastics material or of a plastics composite material.

14. Beverage machine having a supply container according to any of the preceding claims,
**characterised in that**
the flow-line system of the beverage machine (19) suitable for preparing beverages made with water comprises a pump (20), at least one discharge means (21, 22) and at least one multi-port valve (23, 24), and, in terms of flow, the supply container (4) is integrated in a bypass of the water circuit of the beverage machine (19).

15. Beverage machine according to claim 14,
**characterised in that**
the multi-port valve (23) is a three-way valve.

16. Beverage machine according to either claim 14 or claim 15,
**characterised in that**,
when viewed in the flow direction, at least one valve (24), which is suitable for controlling the discharge means, is integrated in the flow-line system in front of the at least one discharge means (21, 22).

17. Method for using a supply container for descaling a beverage machine according to any of the preceding claims 14 to 16,
**characterised by** the hollowing method steps:
- introduction of the dissolved descaling agent into the flow-line system;
- opening of the valve (24) in front of the discharge means until the dissolved descaling agent can be observed to be issuing from the at least one discharge means (21, 22);
- closure of the valve (24) and hallowing the descaling agent to act on the flow-line system for a period of time;
- rinsing of the flow-line system with fresh water for cleaning purposes.

18. Method according to claim 17,
**characterised in that**
when the supply chamber (4) is first filled with water, only a certain amount of water is introduced so that the bottom chamber (7) is filled with a solution of the descaling agent, or when the supply chamber (4) is first filled with water, only a certain amount of water is introduced so that the supply chamber (4) and the bottom chamber (7) are filled and form a solution of the descaling agent (5).

19. Method according to either claim 17 or claim 18,
**characterised in that**
the three-way valve (23) is intended to isolate and connect the water-guiding part of the flow-line system to the part of the flow-line system comprising the supply container (6) containing the descaling agent (5).

20. Method according to any of claims 17 to 19,
**characterised in that**
at least once during the descaling process, the three-way valve (23) is in each of the possible positions thereof, so that the dissolved descaling agent flows therethrough.

## Revendications

1. Réservoir (6) en tant que composant d'un dispositif de détartrage d'un système de conduites d'écoulement, avec un carter (1) qui présente une amenée d'eau (3) alimentée par une source d'eau (2) et dirigée vers une chambre de stockage (4) avec un produit de détartrage (5) soluble dans l'eau qui y est reçu,
**caractérisé en ce que**
le réservoir (6) présente une chambre inférieure (7) raccordée, de façon à permettre le passage de liquide, à la chambre de stockage (4) et destinée à collecter le produit de détartrage dissous par l'eau, et dans laquelle débouche une conduite capillaire (8) destinée à évacuer la solution.

2. Réservoir selon la revendication 1,
**caractérisé en ce que**
la quantité de produit de détartrage dissous conduite au système de conduites d'écoulement par le biais de la conduite capillaire (8) pendant un processus de détartrage correspond approximativement à la quantité d'eau conduite à la chambre de stockage (4) par le biais de l'amenée d'eau (3).

3. Réservoir selon la revendication 1,
**caractérisé en ce que**
la conduite capillaire (8) avec son extrémité posée à l'opposé de la chambre inférieure (7) débouche dans une conduite d'écoulement du système de conduites d'écoulement qui véhicule l'eau de telle sorte que l'écoulement d'eau de cette conduite d'écoulement produit dans la conduite capillaire (8) une dépression qui transporte le produit de détartrage dissous.

4. Réservoir selon une des revendications précédemment citées,
**caractérisé en ce que**
la conduite capillaire (8) est enroulée en spirale au moins par tronçons.

5. Réservoir selon une des revendications précédemment citées,
**caractérisé en ce que**
la conduite capillaire (8) présente un point d'étranglement (9) et/ou une conduite d'écoulement (10) du système de conduites d'écoulement alimentant le réservoir (4) en eau fraîche présente un point d'étranglement (11).

6. Réservoir selon une des revendications précédemment citées,
**caractérisé en ce que**
le carter (1) du réservoir (4) est fermé par un couvercle (12) sur lequel est constitué un goujon de jonction (13) pour le raccordement amovible à un dispositif de réception correspondant.

7. Réservoir selon la revendication 6,
**caractérisé en ce que**
la conduite d'écoulement (10) conduisant l'eau au réservoir (4) ou respectivement l'amenée d'eau (3) présente une vanne à une voie (14) qui, du point de vue de la technique d'écoulement, est disposée immédiatement avant le couvercle (12) ou est intégrée dans le couvercle (12).

8. Réservoir selon une des revendications précédemment citées,
**caractérisé en ce**
**qu'**une paroi intermédiaire (15) de type tamis est disposée entre la chambre de stockage (4) et la chambre inférieure (7).

9. Réservoir selon une des revendications précédemment citées,
**caractérisé en ce**
**qu'**un élément filtrant remplaçable (16) est disposé entre la chambre inférieure (7) et le côté inférieur du produit de détartrage (5).

10. Réservoir selon une des revendications précédemment citées,
**caractérisé en ce**
**qu'**un élément de pression (17) coulissant à l'intérieur de la chambre de stockage (4) est disposé au-dessus du produit de détartrage (5) reçu dans la chambre de stockage (4).

11. Réservoir selon la revendication 10,
**caractérisé en ce que**
l'élément de pression (17) présente un capteur de mesure (18) correspondant à un enregistreur de mesure pour la détection du niveau de la chambre de stockage (4).

12. Réservoir selon la revendication 11,
**caractérisé en ce que**
le capteur de mesure (18) est un aimant et l'enregistreur de mesure est un enregistreur de mesure réagissant à un signal magnétique.

13. Réservoir selon une des revendications précédemment citées,
**caractérisé en ce que**
le réservoir (6) est globalement réalisé en matière plastique ou en matériau composite de matière plastique.

14. Distributeur automatique de boissons avec un réservoir selon une des revendications précédemment citées,
**caractérisé en ce que**
le système de conduites d'écoulement du distributeur automatique de boissons (19) adapté à la réalisation de boissons produites avec de l'eau présente une pompe (20), au moins un dispositif de prélèvement (21, 22) et au moins une vanne à plusieurs voies (23, 24), et le réservoir (4) est, au plan de la technique d'écoulement, intégré dans une dérivation du circuit d'eau du distributeur automatique de boissons (19).

15. Distributeur automatique de boissons selon la revendication 14,
**caractérisé en ce que**
la vanne à plusieurs voies (23) est une vanne à trois voies.

16. Distributeur automatique de boissons selon une des revendications 14 ou 15,
**caractérisé en ce**
**qu'**au moins une vanne (24) adaptée pour piloter le dispositif de prélèvement est intégrée dans le système de conduites d'écoulement en amont de l'au moins un dispositif de prélèvement (21, 22), vu dans le sens d'écoulement.

17. Dispositif d'utilisation d'un réservoir pour le détartrage d'un distributeur automatique de boissons selon une des revendications 14 à 16 précédemment citées,
**caractérisé par** les étapes de procédé suivantes :
- mise en place du produit de détartrage dissous dans le système de conduites d'écoulement,
- ouverture de la vanne (24) en amont du dispositif de prélèvement jusqu'à la constatation d'une sortie du produit de détartrage dissous au niveau de l'au moins un dispositif de prélèvement (21, 22),
- fermeture de la vanne (24) et action du produit de détartrage sur le système de conduites d'écoulement pendant une période de temps,
- rinçage du système de conduites d'écoulement à des fins de nettoyage avec de l'eau fraîche.

18. Procédé selon la revendication 17,
**caractérisé en ce que**
lors du premier remplissage de la chambre de stockage (4) avec de l'eau, ce remplissage en eau se limite à une quantité qui permet que la chambre inférieure (7) soit remplie d'une solution du produit de détartrage, ou, lors du premier remplissage de la chambre de stockage (4) avec de l'eau, ce remplissage en eau se limite à une quantité qui permet que la chambre de stockage (4) et la chambre inférieure (7) soient remplies et qu'il se forme une solution du produit de détartrage (5).

19. Procédé selon la revendication 17 ou 18,
**caractérisé en ce que**
la vanne à trois voies (23) sert à la séparation et au raccordement de la partie du système de conduites d'écoulement qui conduit l'eau avec la partie du système de conduites d'écoulement qui présente le réservoir (6) contenant le produit de détartrage (5).

20. Procédé selon une des revendications 17 à 19,
**caractérisé en ce que**
pendant le processus de détartrage, la vanne à trois voies (23) adopte au moins une fois chacune de ses positions possibles afin d'être parcourue par le produit de détartrage dissous.
